# EUROPÄISCHE PATENTSCHRIFT

(11) **EP 3 004 809 B1**
(45) Veröffentlichungstag und Bekanntmachung des Hinweises auf die Patenterteilung: **26.02.2020**
(21) Anmeldenummer: 14718974.0
(22) Anmeldetag: 22.04.2014
(51) Int. Cl.: G01F 1/32

(54) **WIRBELSTRÖMUNGSMESSSENSOR UND WIRBELSTRÖMUNGSMESSAUFNEHMER ZUR MESSUNG DER STRÖMUNGSGESCHWINDIGKEIT EINES FLUIDS**
SWIRL FLOW MEASUREMENT SENSOR AND SWIRL FLOW MEASUREMENT METER FOR MEASURING THE FLOW VELOCITY OF A FLUID
CAPTEUR DE MESURE D'UN ÉCOULEMENT TOURBILLONNAIRE ET SYSTÈME DE DÉTECTION D'UN ÉCOULEMENT TOURBILLONNAIRE PERMETTANT DE MESURER LA VITESSE D'ÉCOULEMENT D'UN FLUIDE

(30) Priorität: 24.05.2013 DE 102013105363
(43) Veröffentlichungstag der Anmeldung: 13.04.2016
(73) Patentinhaber: Endress+Hauser Flowtec AG, 4153 Reinach (BL) (CH)
(72) Erfinder: STRUB, Andreas, CH-4147 Aesch (CH); WITKOWSKI, Natalie, 79664 Wehr (DE); WIEDERKEHR, Dominique, F-68220 Hagenthal-le-bas (FR); KAMBER, Sascha, CH-4458 Epfingen (CH)
(74) Vertreter: Andres, Angelika Maria
(86) Internationale Anmeldenummer: PCT/EP2014/058105
(87) Internationale Veröffentlichungsnummer: WO 2014/187629

(56) Entgegenhaltungen:
- EP-A1- 0 094 446
- EP-A1- 0 841 545
- DD-A1- 149 571
- GB-A- 2 186 376
- US-A- 4 552 023

## Beschreibung

Die Erfindung betrifft einen Wirbelströmungsmesssensor und einen Wirbelströmungsmessaufnehmer zur Messung der Strömungsgeschwindigkeit eines Fluids.

Zur exakten Messung einer Strömungsgeschwindigkeit oder eines Volumendurchflusses eines in einer Strömungsrichtung fließenden Fluids werden Wirbelströmungsmessaufnehmer verwendet. Die DE 10 2009 001 526 A1 beschreibt einen solchen Messaufnehmer mit einem Messrohr, wobei das Messrohr einen Staukörper aufweist, der einem Wirbelsensor vorgeordnet ist. Der Staukörper dient der Erzeugung einer Kärmän'schen Wirbelstraße im Fluid, deren Druckschwankungen von einem nachfolgend angeordneten Wirbelsensor in ein elektrisches Signal umgeformt werden, wobei die Frequenz der vermessenen Wirbel proportional zum Volumendurchfluss ist.

Wirbelströmungsmesssensoren oder auch kurz Wirbelsensoren für solche Messaufnehmer sind aus dem Stand der Technik u. a. aus der EP 0 841 545 B1 bekannt. Darin wird ein kapazitiver Wirbelsensor beschrieben, der in einem Messrohr eingesetzt und dort zur Messung der Strömungsgeschwindigkeit oder auch des Volumendurchflusses verwendet wird. Im Wesentlichen weist der Wirbelsensor ein Gehäuse auf, innerhalb dessen eine Membran angeordnet ist, an deren Seite, die dem im Messrohr fließenden Fluid zugewandt ist, ein Sensorpaddel befestigt ist. Auf der fluidabgewandten Seite der Membran ist eine kapazitive Elektrodenanordnung angeordnet. Eine Elektrode ist dabei mit der Membran selbst verbunden. Das Sensorpaddel wird durch die Wirbel der Kärmän'schen Wirbelstraße in Schwingung versetzt und ausgelenkt. Diese Auslenkung überträgt sich proportional auf die Elektrodenanordnung, wodurch eine Kapazitätsänderung auftritt, die abgegriffen werden kann.

Wirbelsensoren weisen in der Regel einen eingeschränkten Druckbereich auf, in dem eine Messung möglich ist. Die obere Grenze des Druckbereichs ist bestimmt durch zulässige Maximalwerte von noch zulässigen Membran- bzw. Biegespannungen, die auf Membran und Paddel wirken. Um den Druckbereich zu höheren Druckwerten zu erweitern, werden hochfeste Werkstoffe eingesetzt, die höhere Biegespannungen aushalten können. Jedoch sind diese Werkstoffe, wie bspw. hochfeste Stähle, teuer und aufwändig zu verarbeiten.

Aus dem Stand der Technik ist aus dem Bereich der Drucksensoren ein Überlastschutz für Differenzdrucksensoren mit Membranen bekannt. So ist eine Überlastschutzeinrichtung für Drucksensoren in "Overload-Resistant Pressure Sensors in the Nominal Range of 10 mbar (1 kPa)" - T. Kober, R. Werthschützky, Institute of Electromechanical Design, Technische Universität Darmstadt, Proc. Eurosensors XXIV, September 5-8, 2010, Linz, Austria sowie in "Mikromechanischer Überlastschutz für Drucksensoren durch strukturierte Gegenlager aus Glas" - T. Kober, R. Werthschützky, Sensoren und Messsysteme 2010, Berlin: VDE Verlag GmbH, ISBN 978-3-8007-3260-9 beschrieben. Darin wird ein mikromechanischer Überlastschutz für Differenzdrucksensoren aus thermisch behandeltem Glas hergestellt. In einen Silizium-Wafer werden dazu definierte Ausnehmungen durch Laserschneiden eingebracht. Anschließend werden ein Glas-Wafer und der präparierte Silizium-Wafer aufeinander positioniert. Durch thermische Behandlung wölbt sich das Glas in die Ausnehmungen. Darüber wird eine Silizium-Messplatte positioniert, die als Druckmembran dient. Bei einer Überdruckbelastung von oben lenkt die Silizium-Messplatte aus ihrer Ruhelage nach unten zum präparierten Glas-Wafer aus und wird von diesem vor Bruch geschützt.

Nachteilig am vorgenannten Stand der Technik ist jedoch, dass bei Überlastung der Silizium-Membran, also ab einem bestimmten Druck, diese komplett am Überlastschutz anliegt. Zwar kann dadurch die Membran effektiv vor einer Überlastung und folglich vor Beschädigungen geschützt werden, jedoch kann die Membran auch keine Schwingungen mehr aufnehmen. Der mit der Membran gebildete Messsensor kann keine Messsignale mehr erzeugen.

Ausgehend von diesem Stand der Technik liegt der vorliegenden Erfindung die Aufgabe zugrunde, den Druckbereich des Wirbelsensors einfach und kostengünstig zu erweitern.

Diese Aufgabe wird durch eine Vorrichtung mit den Merkmalen des unabhängigen Anspruchs 1 gelöst.

Die weitere Aufgabe besteht darin, einen Wirbelströmungsmessaufnehmer bereitzustellen, der in einem im Vergleich zu bisher bekannten Messaufnehmern höheren Druckbereich messen kann. Sie wird durch den Wirbelströmungsmessaufnehmer mit den Merkmalen des Anspruchs 6 gelöst.

Bevorzugte Ausführungsformen werden durch die Unteransprüche beschrieben.

Eine erfindungsgemäße Ausführungsform sieht einen Wirbelströmungssensor für einen Wirbelströmungsaufnehmer zur Messung der Strömungsgeschwindigkeit eines durch ein Messrohr fließenden Fluids vor. Der Wirbelströmungssensor weist ein Elektrodegehäuse mit einer Mittelachse auf, an dessen Verbindungsabschnitt eine Schulter ausgebildet sein kann, die eine Anlagefläche aufweist. Hierbei kann in einer Ebene der Schulter eine Membran angeordnet sein, deren Rand über der Anlagefläche positioniert und zu dieser axial beabstandet ist. Der Wirbelstromsensor weist ferner eine flanschförmige Abstützeinrichtung mit einem radialen Randabschnitt und einem zylindrischen Axialabschnitt auf, wobei der radiale Randabschnitt mit seiner Oberfläche an der Schulter des Grundkörpers anliegen und der zylindrischen Axialabschnitt sich parallel zu der Mittelachse erstrecken kann, so dass sich die Membran bei Aufbringen eines vorbestimmten Drucks auf diese gegen die Abstützeinrichtung abstützen kann.

Die Abstützeinrichtung dient als ein Überlastschutz. Vorteilhaft kann die Membran bei einer hohen Druckbelastung, die den vorbestimmten Druckbereich, den die Membran ohne Beschädigungen zu erhalten aushält, übersteigt, teilweise an der flanschförmigen Abstützeinrichtung anliegen. Dies führt dazu, dass die Sensormembran höherem Druck standhalten kann und gleichzeitig im nicht abgestützten Bereich beweglich bleibt. Durch die Verringerung des beweglichen Bereichs sinkt zwar die Empfindlichkeit des Sensors, dies wird jedoch teilweise aufgrund des höheren Wirbeldrucks kompensiert. Der höhere Wirbeldruck entsteht hierbei durch die höhere Dichte bei höherem Druck des Prozesses.

Erfindungsgemäß kann vorgesehen sein, dass ein äußerer Durchmesser des zylindrischen Axialabschnitts der Abstützeinrichtung einem inneren Durchmesser eines Elektrodenabschnitts des Elektrodegehäuses in etwa entspricht, so dass die Abstützeinrichtung innerhalb des Elektrodegehäuses über eine Presspassung oder Schrumpfpassung gehalten sein kann. Dafür sollte der äußere Durchmesser der Abstützeinrichtung zuzüglich eines Toleranzbereiches dem inneren Durchmesser des in diesem Abschnitt zylindrischen Elektrodegehäuses entsprechen. Die Abstützeinrichtung kann somit bei der Herstellung des Wirbelsensors einfach und schnell in das Elektrodegehäuse eingebaut werden. Der radiale Randabschnitt sorgt dabei für einen guten Sitz.

Ferner kann eine Ausführungsform der Erfindung vorsehen, dass die Abstützeinrichtung entlang der Mittelachse einen Abschnitt einer hülsenförmigen ersten Elektrodenanordnung umgibt, wobei die erste Elektrodenanordnung mit der ersten Oberfläche der Membran verbunden, bevorzugt über ein Übergangsstück verbunden sein kann. Dazu sieht die Erfindung vorteilhaft vor, dass die Abstützeinrichtung eine zentralaxiale Bohrung aufweist, deren Durchmesser so bemessen ist, dass die hülsenförmige erste Elektrodenanordnung durch die Bohrung durchgeführt ist, ohne eine Innenfläche der Bohrung zu berühren. Die behindert damit nicht die Funktion des Wirbelsensors im normalen Druckbereich, da die Membran erst im erhöhten Druckbereich abgestützt werden muss. Die Messgenauigkeit des Sensors wird durch den Einbau der Abstützeinrichtung nicht beeinflusst.

Bevorzugt kann der Wirbelströmungssensor ein kapazitiver Wirbelströmungssensor, auch DSC-Sensor (Digital-Switched-Capacitor) genannt, sein.

Hierbei kann die erste Elektrodenanordnung über ein Übergangsstück mit der ersten Oberfläche der Membran verbunden sein, wobei die erste Elektrodenanordnung eine oder mehrere Elektrode(n) aufweisen kann. Die erste Elektrodenanordnung und die Membran können somit von dem Elektrodegehäuse umgeben sein. Das Elektrodegehäuse kann eine zweite Elektrodenanordnung mit zumindest einer Gegenelektrode aufweisen. Dabei kann die zweite Elektrodenanordnung einen oder mehrere Abschnitt(e) der ersten Elektrodenanordnung, bevorzugt beabstandet zu der Abstützeinrichtung, umgeben. Bei diesem Sensortyp werden Schwenkbewegungen des Paddels, d. h. des schwenkbaren Abschnitts mittels zweier elektrisch geschalteter Kapazitäten in differentielle elektrische Ladungsänderungen umgewandelt und durch eine geeignete Messelektronik ausgewertet. So können die Schwenkbewegungen des Paddels auf die hülsenartige erste Elektrodenanordnung als Mittelelektrode übertragen werden, die als direkte Verlängerung des Paddels ausgebildet sein kann. Ferner kann in der zweiten Elektrodenanordnung die - von den Druckschwankungen entkoppelte - äußere Gegenelektrode vorgesehen sein, die aus zwei Halbschalen gebildet werden kann, die konzentrisch zu der hülsenförmigen ersten Elektrodenanordnung angeordnet sein können.

Erfindungsgemäß kann für eine Ausgestaltung der Membran vorgesehen sein, dass die Membran kreisförmig ist und umfänglich einen ringförmig verdickten Rand aufweist. Der verdickte Rand schmiegt sich in die Schulter des Elektrodegehäuses ein und kann mittels einer zusätzlichen Dichtung fluiddicht abgedichtet werden. Die Membran kann gleichmäßig schwingen und ist randseitig effektiv abgestützt. Zudem ist diese Bauform leicht herstellbar.

An der zweiten Oberfläche der Membran kann vorteilhaft an der zweiten Oberfläche der Membran ein biegesteifes, dünnes Sensorpaddel angeordnet ist, das sich entlang der Mittelachse des Wirbelströmungssensors von der zweiten Oberfläche der Membran weg erstreckt, wobei das Sensorpaddel zwei ebene Hauptflächen aufweist. Die Hauptflächen bilden einen kleinen Keil, so dass das Paddel die Fluidströmung nicht stört, sondern nur durch die Wirbelstraße in Schwingung versetzt wird. "Dünn" meint hier, dass das Sensorpaddel so bemessen ist, dass die durch die Wirbel hervorgerufenen Druckschwankungen einfach auf das Paddel zu übertragen sind und es zu schwingen beginnt. Dabei können die Abmessungen dem entsprechend zu messenden Druckbereich angepasst werden. Die Biegesteifigkeit ergibt sich aus der Materialwahl des Sensorpaddels, für das bevorzugt Stahl verwendet werden kann, wie im Folgenden noch erläutert wird.

Die Membran und mit ihr verbundene Teile können ferner vorteilhaft einstückig ausgebildet sein, wobei das daraus gebildete Sensorbauteil aus Stahl bestehen kann. Dazu können die einzelnen Teile Membran, Paddel, Rand und erste Elektrodenanordnung einzeln hergestellt und anschließend miteinander verschweißt werden. Vorteilhaft können auch das Elektrodegehäuse und die Abstützeinrichtung aus dem gleichen Stahl gefertigt werden, wodurch die Teile eine nahezu gleiche thermische Ausdehnung zeigen. Spannungen innerhalb des Bauteils können dadurch vermieden werden. Bevorzugt wird 1.4301 oder 1.4435 Stahl verwendet, der als austenitischer, rostfreier Stahl besonders korrosionsbeständig ist. Zudem kann diese Art von Stahl auch bei höheren Betriebstemperaturen von bis zu 450 °C problemlos eingesetzt werden. Es können jedoch auch andere Stähle oder Metalllegierungen zur Herstellung des Wirbelsensors verwendet werden. Das Material kann abhängig von dem zu erreichenden Druckbereich ausgewählt werden, wobei auf besonders hochfeste Stähle verzichtet werden kann.

Die Erfindung betrifft ferner einen Wirbelströmungsaufnehmer zur Messung der Strömungsgeschwindigkeit eines in einem Messrohr fließenden Fluids, wobei der Wirbelströmungsaufnehmer einen mit dem Messrohr verbundenen Staukörper, der der Erzeugung Kärmän'scher Wirbel dient, und einen kapazitiven, auf von den Wirbeln erzeugte Druckschwankungen ansprechenden Wirbelströmungssensor, der stromabwärts vom Staukörper in eine wandseitige Öffnung des Messrohrs eingebaut ist, aufweisen kann.

Dabei kann insbesondere vorgesehen sein, dass das Elektrodegehäuse so biegesteif dimensioniert sein kann, dass das Elektrodegehäuse sich bei einer größten zulässigen auf das Messrohr einwirkenden Beschleunigung nicht verbiegt.

Wie der Wirbelsensor in einen Messaufnehmer eingebaut werden kann, kann u. a. der DE 10 2009 001 526 A1 oder auch der EP 0 841 545 B1 entnommen werden. Im Wesentlichen kann der Wirbelsensor in eine Bohrung des Messrohres eingesetzt werden, wobei er fluid- und druckdicht abgedichtet werden soll, damit eine genaue Messung der Strömungsgeschwindigkeit erfolgen kann.

Weitere Ausführungsformen, sowie einige der Vorteile, die mit diesen und weiteren Ausführungsformen verbunden sind, werden durch die nachfolgende ausführliche Beschreibung deutlich und besser verständlich. Unterstützend hierbei ist auch der Bezug auf die Figuren in der Beschreibung. Gegenstände oder Teile derselben, die im Wesentlichen gleich oder sehr ähnlich sind, können mit denselben Bezugszeichen versehen sein. Es zeigt:
- **Fig. 1**: einen Längsschnitt durch einen erfindungsgemäßen Wirbelsensor, und
- **Fig. 2**: eine Abstützeinrichtung in einem Längsschnitt.

Eine erfindungsgemäße Vorrichtung betrifft einen Wirbelsensor 1, dessen Messbereich durch Verwendung einer im Wesentlichen flanschförmigen Abstützeinrichtung 8 erweitert werden kann.

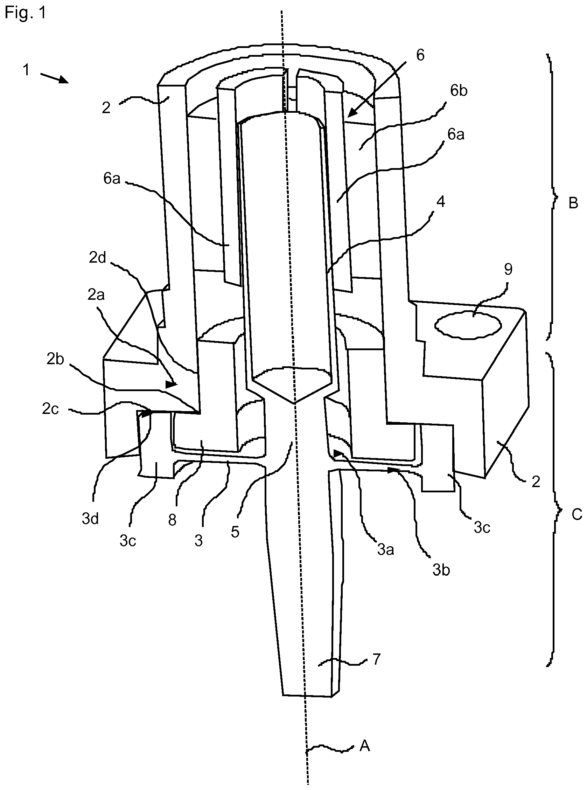

Der in **Fig. 1** dargestellte Wirbelsensor 1 ist ein kapazitiver Wirbelsensor, der ein Elektrodegehäuse 2 aufweist, der eine erste und zweite Messelektrodenanordnung schützend einschließt. Das Elektrodegehäuse 2 ist entlang seiner Mittelsachse A rotationssymmetrisch ausgebildet, wobei sowohl ein innerer als auch ein äußeren Durchmesser in einem Elektrodenabschnitt B schmaler ist, als in einem Membranabschnitt C. Zwischen den beiden

Abschnitten B, C ist eine Schulter 2a als Übergang vorgesehen. Im Inneren des Elektrodegehäuses 2 bildet die Schulter 2a eine umlaufende, nach innen gerichtete Kante 2b.

Das Elektrodegehäuse 2 ist in seinem Membranabschnitt C als Verbindungsbereich ausgestaltet, in dem Bohrungen 9 vorgesehen sind, die zur Verbindung des Wirbelströmungssensors 1 mit einem Messaufnehmer oder einem Messrohr dienen. Hierzu können herkömmliche Verbindungsmittel wie Schrauben, Nieten oder ähnliches Verwendung finden.

Ferner ist innerhalb des Elektrodegehäuses 2 eine Sensormembran 3 angeordnet. Die Membran 3 ist kreisförmig ausgebildet und weist eine erste Oberfläche 3a und eine zweite Oberfläche 3b auf. Die erste Oberfläche 3a ist dabei dem Inneren dem Elektrodegehäuse 2 zugewandt, die zweite Oberfläche 3b ist dem Elektrodegehäuse 2 abgewandt. In einem Randbereich weist die Membran 3 einen verdickten Rand 3c auf, der im Längsschnitt rechteckig ausgebildet ist. Der Rand 3c ist hierbei höher als die Dicke der Membran 3. Eine Oberfläche 3d des Randes 3c ist dem Inneren des Elektrodegehäuses 2 zugewandt und liegt an einer Anlagefläche 2c des Elektrodegehäuses 2 an. Zwischen dem Rand 3c und seiner Anlagefläche 2c in dem Elektrodegehäuse 2 kann einen Schweißnaht oder eine Dichtung angeordnet sein, um den kapazitiven Wirbelsensor 3 als solchen fluiddicht abzudichten.

An der ersten Oberfläche 3a der Membran 3 ist eine hülsenförmige erste Elektrodenanordnung 4 befestigt, die eine Elektrode (figurativ nicht dargestellt) umfasst.

An der Übergangsstelle der ersten Elektrodenanordnung 4 zur Membran 3 ist ein massives Übergangsstück 5 vorgesehen, das die erste Elektrodenanordnung 4 mit der Oberfläche 3a der Membran 3 verbindet. Dabei ist das Übergangsstück 5 in etwa so bemessen, dass der Resonanzfrequenz des Kondensators genügend hoch liegt.

Der Elektrodenabschnitt B des Elektrodegehäuses 2 umgibt die erste Elektrodenanordnung 4 umfänglich und weist eine zweite Elektrodenanordnung 6 auf, die ihrerseits zwei Gegenelektroden 6a und ein Isoliermaterial 6b umfasst. Die Gegenelektroden 6a sind dabei als Halbschalen ausgebildet.

An der zweiten Oberfläche 3b der Membran 3 ist ein Sensorpaddel 7 befestigt, das zwei Hauptflächen aufweist (figurativ nicht dargestellt), die zu einer Spitze des Paddels 7 fluchten und somit einen schmalen Keil bilden.

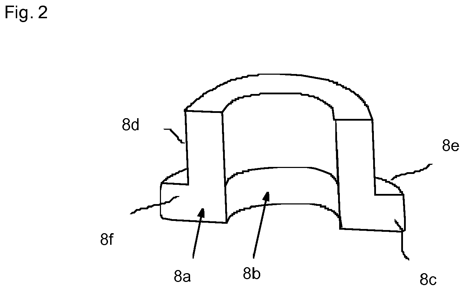

Zwischen der Membran 3 und dem Elektrodegehäuse 2 ist ferner eine flanschförmige Abstützeinrichtung 8 vorgesehen, die auch in **Fig. 2** in einem Längsschnitt dargestellt ist. Die Abstützeinrichtung 8 ist im Wesentlichen zylindrisch ausgebildet, wobei sie in einem unteren Drittel eine Abstufung 8a aufweist. Die Abstufung 8a ist dabei aus zwei senkrecht zu einander angeordneten Abschnitten, einem radialen Randabschnitt 8c und einem zylindrischen Axialabschnitt 8d, gebildet.

Entlang ihrer mittleren Längsachse weist die Abstützeinrichtung 8 eine durchgängige, zentralaxiale Bohrung 8b auf, deren innerer Durchmesser derart bemessen ist, dass die erste Elektrodenanordnung 4 berührungslos innerhalb der Bohrung 8b angeordnet ist (siehe auch **Fig. 1**) und die Innenfläche der Bohrung 8b zur Außenfläche der ersten Elektrodenanordnung 4 beabstandet ist. Ein äußerer Durchmesser des oberen Drittels entspricht dabei einem inneren Durchmesser des Elektrodegehäuses 2, so dass die Abstützeinrichtung 8 in dem Elektrodegehäuse 2 durch eine Presspassung gehalten ist.

Damit die Abstützeinrichtung 8 in dem Elektrodegehäuse 2 gut gehalten ist, ist der zylindrischen Axialabschnitt 8d länger ausgebildet als der radiale Randabschnitt 8c. Der zylindrische Axialabschnitt 8d liegt dabei mit seiner Außenseite an einer axialen Anlagefläche 2d an der Innenseite des Elektrodegehäuses 2 an. Der radiale Randabschnitt 8c kommt mit seiner Oberfläche 8e ferner an der Anlagefläche 2c des Elektrodegehäuses 2 zu liegen. Die Abstufung 8a schließt damit die Kante 2b ein, die durch die Schulter 2a gebildet wird, wobei die Kante 8b direkt die Kante 2b berührt.

Zur korrekten Positionierung der Abstützeinrichtung 8 in dem Elektrodegehäuse 2 kann diese eingepresst werden. Dazu ist der äußere Durchmesser des Axialabschnitts 8d in etwa in der Größenordnung des inneren Durchmessers des Elektrodenabschnitts B des Elektrodegehäuses 2, so dass eine Presspassung gegeben ist.

Vergleichsmessungen von Wirbelsensoren 1 mit und ohne Abstützeinrichtung 8 haben hierzu ergeben: Die höchste Vergleichsspannung der mittels der Abstützeinrichtung 8 unterstützten Membran 3 liegt bei 160 bar in der Nähe der höchsten Vergleichsspannung für eine ungestützte Membran 3 bei 40 bar.

Die Membran 3 liegt bei Drücken über 40 bar auf dem Überlastschutz an, wodurch sich die Spannung in der Mitte der Membran 3 bei höherem Druck verringert. Im Gegenzug erhöht sich die Spannung am Rand der Membran 3, kann jedoch nicht höher als die maximale Spannung in der ungestützten Membran 3 bei 40 bar werden. Legt sich die Membran 3 an die Abstützeinrichtung 8 an, verringert sich somit die Empfindlichkeit des Paddels 7, da die schwingende Membranfläche sich um die Anlagefläche, die durch die Oberfläche der Abstützeinrichtung 8 gegeben ist verkleinert. Hierdurch muss eine größere Kraft auf das Paddel 7 wirken, um eine Auslenkung der ersten Elektrodenanordnung 4 zu erreichen. Jedoch steigt der auf das Paddel 7 wirkende Wirbeldruck proportional zur Dichte des Fluids an, so dass sich die Dichte insbesondere bei kompressiblen Medien bei steigendem Druck erhöht. Dadurch kann die Verringerung der Empfindlichkeit kompensiert werden. Die Auslenkung der zylindrischen Hülse, d. h. der ersten Elektrodenanordnung 4 der abgestützten Membran 3, im höheren Druckbereich bei in etwa 160 bar ist bei gleicher Durchflussmenge an Fluid ähnlich groß wie die Auslenkung bei der nicht abgestützten Membran bei 40 bar. Die Membran 3 wird somit effektiv abgestützt.

Die Abstützeinrichtung 8 ermöglicht es, die Membran 3 bis zu einem Druck in der Höhe von in etwa 250 bar zu nutzen. Hier liegen die gemessenen Spannungen jedoch höher als bei der ungestützten Membran 3, aber noch unter der spezifizierten Grenze für sekundäre Spannungen von 410 MPa.

**Bezugszeichenliste**

| | |
|---|---|
| 1 | Wirbelsensor |
| 2 | Elektrodegehäuse |
| 2a | Stufe |
| 2b | Kante |
| 2c | Anlagefläche |
| 2d | Anlagefläche |
| 3 | Membran |
| 3a | Erste Oberfläche |
| 3b | Zweite Oberfläche |
| 3c | Rand |
| 3d | Oberfläche Rand |
| 4 | Erste Elektrodenanordnung |
| 5 | Übergangsstück |
| 6 | Zweite Elektrodenanordnung |
| 6a | Gegenelektrode |
| 6b | Isoliermaterial |
| 7 | Sensorpaddel |
| 8 | Abstützeinrichtung |
| 8a | Abstufung |
| 8b | Mittlere Bohrung |
| 8c | radiale Randabschnitt |
| 8d | zylindrischen Axialabschnitt |
| 8e | Oberfläche radiale Randabschnitt |
| 8f | Kante |
| 9 | Bohrung |

## Patentansprüche

1. Wirbelströmungssensor für einen Wirbelströmungsaufnehmer zur Messung der Strömungsgeschwindigkeit eines durch ein Messrohr fließenden Fluids,
wobei der Wirbelströmungssensor (1) einen Gehäusegrundkörper (2) mit einer Mittelachse (A) aufweist, an dessen Verbindungsabschnitt eine Schulter (2a) ausgebildet ist, die eine Anlagefläche (2c) aufweist, und
wobei in einer Ebene der Schulter (2a) eine Membran (3) angeordnet ist, deren Rand über der Anlagefläche (2c) positioniert und zu dieser axial beabstandet ist,
wobei eine erste Elektrodenanordnung (4) mit einer ersten Oberfläche (3a) der Membran (3) verbunden ist und sich entlang der Mittelachse (A) des Wirbelströmungssensors (1) von der ersten Oberfläche (3a) der Membran (3) weg erstreckt,
wobei an einer zweiten Oberfläche (3b) der Membran (3) ein biegesteifes, dünnes Sensorpaddel (7) angeordnet ist, das sich entlang der Mittelachse (A) des Wirbelströmungssensors (1) von der zweiten Oberfläche (3b) der Membran (3) weg erstreckt, wobei das Sensorpaddel (7) zwei ebene Hauptflächen aufweist,
**dadurch gekennzeichnet, dass**
der Wirbelströmungssensor ferner eine flanschförmige Abstützeinrichtung (8) mit einem radialen Randabschnitt (8c) und einem zylindrischen Axialabschnitt (8d) aufweist, wobei der radiale Randabschnitt (8c) mit seiner Oberfläche (8e) an der Schulter (2a) des Grundkörpers (2) anliegt und der zylindrischen Axialabschnitt (8d) sich parallel zu der Mittelachse (A) erstreckt, so dass sich die Membran (3) bei Aufbringen eines vorbestimmten Drucks auf diese gegen die Abstützeinrichtung (8) abstützt,
wobei ein äußerer Durchmesser des zylindrischen Axialabschnitts (8d) der Abstützeinrichtung (8) einem inneren Durchmesser eines Elektrodenabschnitts (B) des Gehäusegrundkörpers (2) entspricht, so dass die Abstützeinrichtung (8) innerhalb des Gehäusegrundkörpers (2) über eine Presspassung gehalten ist,
wobei die Abstützeinrichtung (8) entlang der Mittelachse (A) einen Abschnitt einer hülsenförmigen ersten Elektrodenanordnung (4) umgibt,
wobei die Abstützeinrichtung (8) eine zentralaxiale Bohrung (8b) aufweist, deren Durchmesser so bemessen ist, dass die hülsenförmige erste Elektrodenanordnung (4) berührungslos durch die Bohrung (8b) durchgeführt ist.

2. Wirbelströmungssensor nach Anspruch 1,
wobei die erste Elektrodenanordnung (4) über ein Übergangsstück (5) mit der ersten Oberfläche (3a) der Membran (3) verbunden, wobei das Übergangsstück berührungslos in die zentralaxiale Bohrung hineinragt.

3. Wirbelströmungssensor nach Anspruch 1 oder 2,
**dadurch gekennzeichnet, dass**
der Wirbelströmungssensor (1) ein kapazitiver Wirbelströmungssensor ist, wobei der Gehäusegrundkörper (2) eine zweite Elektrodenanordnung (6) mit zumindest einer Gegenelektrode (6a) aufweist und wobei die zweite Elektrodenanordnung (6) zumindest einen Abschnitt der ersten Elektrodenanordnung (4) umgibt.

4. Wirbelströmungssensor nach Anspruch 3,
wobei die zweite Elektrodenanordnung (6) den zumindest einen Abschnitt der ersten Elektrodenanordnung (4) beabstandet zu der Abstützeinrichtung (8) umgibt.

5. Wirbelströmungssensor nach zumindest einem der vorhergehenden Ansprüche,
**dadurch gekennzeichnet, dass**
die Membran (3) kreisförmig ist und umfänglich einen ringförmig verdickten Rand (3c) aufweist.

6. Wirbelströmungsmessaufnehmer zur Messung der Strömungsgeschwindigkeit eines in einem Messrohr fließenden Fluids,
wobei der Wirbelströmungsaufnehmer einen mit dem Messrohr verbundenen Staukörper, der der Erzeugung Kármán'scher Wirbel dient, und einen kapazitiven, auf von den Wirbeln erzeugte Druckschwankungen ansprechenden Wirbelsensor (1), der stromabwärts vom Staukörper in eine wandseitige Öffnung des Messrohrs eingebaut ist, aufweist,
**dadurch gekennzeichnet, dass**
der Wirbelsensor ein Wirbelsensor (1) nach zumindest einem der Ansprüche 1 bis 5 ist.

## Claims

1. Vortex flow sensor for a vortex flowmeter designed to measure the flow velocity of a fluid flowing through a measuring tube,
wherein the vortex flow sensor (1) has a housing meter body (2) with a central axis (A), wherein a shoulder (2a) that features a contact surface (2c) is formed on the connection section of said axis, and
wherein a membrane (3) is arranged at a level of the shoulder (2a), wherein the edge of said membrane is positioned over the contact surface (2c) and is axially spaced at a distance from said surface,
wherein a first electrode arrangement (4) is connected to a first surface (3a) of the membrane (a) and extends along the central axis (A) of the vortex flow sensor (1) from the first surface (3a) of the membrane (3),
wherein a rigid thin sensor paddle (7) is arranged on a second surface of the membrane (3), said paddle extending along the central axis (A) of the vortex flow sensor (1) from the second surface (3b) of the membrane (3), wherein the sensor paddle (7) has two planar main surfaces,
**characterized in that**
the vortex flow sensor further comprises a support unit (8) in the form of a flange with a radial edge section (8c) and a cylindrical axial section (8d), wherein the radial edge section (8c) rests with its surface (8e) on the shoulder (2a) of the meter body (2) and the cylindrical axial section (8d) extends parallel to the central axis (A) such that the membrane (3) rests on the support unit (8) when a predefined pressure is applied to said membrane,
wherein an outer diameter of the cylindrical axial section (8d) of the support unit (8) corresponds to an inner diameter of an electrode section (B) of the housing meter body (2), such that the support unit (8) is held inside the housing meter body (2) by means of a press fit,
wherein along the central axis (A) the support unit (8) surrounds a section of a first sleeve-shaped electrode arrangement (4),
wherein the support unit (8) has a central axial bore (8b) whose diameter is such that the sleeve-shaped first electrode arrangement (4) passes through the bore (8b) without contact.

2. Vortex flow sensor as claimed in Claim 1,
wherein the first electrode arrangement (4) is connected via a transition piece (5) to the first surface (3a) of the membrane (3), wherein the transition piece projects into the central axial bore without contact.

3. Vortex flow sensor as claimed in Claim 1 or 2,
**characterized in that**
the vortex flow sensor (1) is a capacitance vortex flow sensor, wherein the housing meter body (2) has a second electrode arrangement (6) with at least a counter-electrode (6a) and wherein the second electrode arrangement (6) at least surrounds a section of the first electrode arrangement (4).

4. Vortex flow sensor as claimed in Claim 3,
wherein the second electrode arrangement (6) at least surrounds a section of the first electrode arrangement (4) at a distance from the support unit (8).

5. Vortex flow sensor as claimed in at least one of the previous claims,
**characterized in that**
the membrane (3) is circular and all around its circumference has a circular thicker edge (3c) that is annular in shape.

6. Vortex flowmeter designed to measure the flow velocity of a fluid flowing through a measuring tube,
wherein the vortex flowmeter has a bluff body that is connected to the measuring tube, which is used for the generation of Karman vortices, and a capacitive vortex sensor (1) that reacts to the pressure fluctuations generated by the vortices, wherein said vortex sensor is installed downstream from the bluff body in an opening in the wall of the measuring tube,
**characterized in that**
the vortex sensor is a vortex sensor (1) as claimed in at least one of the Claims 1 to 5.

## Revendications

1. Capteur vortex pour un débitmètre vortex destiné à la mesure de la vitesse d'écoulement d'un fluide s'écoulant à travers un tube de mesure,
le capteur vortex (1) présentant un corps de base de boîtier (2) avec un axe médian (A), à la section de liaison duquel est formé un épaulement (2a), qui présente une surface d'appui (2c), et
une membrane (3) étant disposée dans un plan de l'épaulement (2a), membrane dont le bord est positionné au-dessus de la surface d'appui (2c) et est axialement espacé de celle-ci,
un premier arrangement d'électrode (4) étant relié avec une première surface (3a) de la membrane (a) et s'étendant le long de l'axe médian (A) du capteur vortex (1) en s'éloignant de la première surface (3a) de la membrane (3),
une palette de capteur (7) mince, résistante à la flexion, étant disposée sur une deuxième surface de la membrane (3), laquelle palette s'étend le long de l'axe médian (A) du capteur vortex (1) en s'éloignant de la deuxième surface (3b) de la membrane (3), la palette de capteur (7) présentant deux surfaces principales planes,
**caractérisé**
**en ce que** le capteur vortex comprend en outre un dispositif d'appui (8) en forme de bride avec une partie marginale radiale (8c) et une partie axiale cylindrique (8d), la partie marginale radiale (8c) reposant avec sa surface (8e) sur l'épaulement (2a) du corps de base (2) et la partie axiale cylindrique (8d) s'étendant parallèlement à l'axe médian (A), si bien que la membrane (3) s'appuie contre le dispositif d'appui (8) en cas d'application d'une pression prédéterminée, un diamètre extérieur de la partie axiale cylindrique (8d) du dispositif d'appui (8) correspondant à un diamètre intérieur d'une section d'électrode (B) du corps de base de boîtier (2), si bien que le dispositif d'appui (8) est maintenu à l'intérieur du corps de base de boîtier (2) au moyen d'un ajustement serré,
le dispositif d'appui (8) entourant le long de l'axe médian (A) une partie d'un premier arrangement d'électrode (4) en forme de douille,
le dispositif d'appui (8) présentant un perçage (8b) axial centré, dont le diamètre est dimensionné de telle sorte que le premier arrangement d'électrode (4) en forme de douille passe sans contact à travers le perçage (8b).

2. Capteur vortex selon la revendication 1,
pour lequel le premier arrangement d'électrode (4) est relié via une pièce de transition (5) avec la première surface (3a) de la membrane (3), la pièce de transition pénétrant sans contact dans le perçage axial centré.

3. Capteur vortex selon la revendication 1 ou 2,
**caractérisé**
**en ce que** le capteur vortex (1) est un capteur vortex capacitif, le corps de base de boîtier (2) présentant un deuxième arrangement d'électrode (6) avec au moins une contre-électrode (6a) et le deuxième arrangement d'électrode (6) entourant au moins une partie du premier arrangement d'électrode (4).

4. Capteur vortex selon la revendication 3,
pour lequel le deuxième arrangement d'électrode (6) entoure au moins une partie du premier arrangement d'électrode (4), espacé du dispositif d'appui (8).

5. Capteur vortex selon au moins l'une des revendications précédentes,
**caractérisé**
**en ce que** la membrane (3) est circulaire et présente sur sa circonférence un bord (3c) plus épais en forme d'anneau.

6. Débitmètre vortex destiné à la mesure de la vitesse d'écoulement d'un fluide circulant dans un tube de mesure,
le débitmètre vortex comportant un corps de retenue relié avec le tube de mesure, qui sert à la génération des tourbillons de Karman, et un capteur vortex (1) réagissant aux fluctuations de pression générées par les tourbillons, lequel capteur est monté en aval du corps de retenue, dans une ouverture réalisée dans la paroi du tube de mesure,
**caractérisé**
**en ce que** le capteur vortex est un capteur vortex (1) selon au moins l'une des revendications 1 à 5.
